# EUROPEAN PATENT SPECIFICATION

(11) **EP 4 159 551 B1**
(45) Date of publication and mention of the grant of the patent: **07.05.2025**
(21) Application number: 21306356.3
(22) Date of filing: 30.09.2021
(51) Int. Cl.: B60R 21/205

(54) **INTERIOR TRIM PART FOR A VEHICLE, ASSEMBLY COMPRISING THE INTERIOR TRIM PART AND AN AIRBAG MODULE AND PROCESS FOR PRODUCING THE INTERIOR TRIM PART**
INNENVERKLEIDUNGSTEIL FÜR EIN FAHRZEUG, ANORDNUNG MIT DEM INNENVERKLEIDUNGSTEIL UND EINEM AIRBAGMODUL UND VERFAHREN ZUR HERSTELLUNG DES INNENVERKLEIDUNGSTEILS
PIÈCE DE GARNITURE INTÉRIEURE D'UN VÉHICULE, ENSEMBLE COMPRENANT LA PIÈCE DE GARNITURE INTÉRIEURE ET UN MODULE D'AIRBAG ET PROCÉDÉ DE PRODUCTION DE LA PIÈCE DE GARNITURE INTÉRIEURE

(43) Date of publication of application: 05.04.2023
(73) Proprietor: Faurecia Intérieur Industrie, 92000 Nanterre (FR)
(72) Inventor: DIESTRE ESTEBE, Angel, 08022 Barcelona (ES); ONORATO ESTEVEZ, David, 08192 Barcelona (ES)
(74) Representative: Novagraaf Group

(56) References cited:
- EP-A2- 1 731 381
- US-A1- 2016 075 301
- US-A1- 2017 267 202
- US-B2- 10 596 991

## Description

### Field of the disclosure

The present disclosure relates to an interior trim part for a vehicle comprising a chute channel portion adapted for receiving an airbag module and for guiding the deployment of the airbag. The present disclosure also relates to a process for producing the interior trim part.

### Background of the disclosure

Document EP 1 731 381 A1 discloses an interior trim part for a vehicle, the interior trim part having a structural part and the structural part comprising:
- a chute channel portion having a substantially tubular shape extending along a chute demolding direction between a first end and a second end, the chute channel portion comprising a first wall, a second wall and two side walls extending between the first wall and the second wall, the chute channel portion has a chute channel internal face, the chute channel internal face delimits an expansion passage intended to guide an expansion of an airbag, and
- a base portion having a base portion internal face and a base portion external face, the base portion comprises a first base portion, a base protrusion and a second base portion, the base portion internal face of the first base portion is connected to the first end of the chute channel portion, the base protrusion extends between the first base portion and the second base portion, the external surface of the base protrusion protrudes with respect to the external surface of the second base portion and the base portion internal face of the base protrusion defines a recess, and
- a reinforcing portion integral with the chute channel portion and the base portion, the reinforcing portion is connected to the base portion internal face, the reinforcing portion defines a plurality of cavities.

Document US2020339057A1 discloses an interior trim part for a vehicle, the interior trim part having a structural part and the structural part comprising:
- a chute channel portion having a substantially tubular shape extending along a chute demolding direction between a first end and a second end, the chute channel portion comprising a first wall, a second wall and two side walls extending between the first wall and the second wall, the chute channel portion has a chute channel internal face, the chute channel internal face delimits an expansion passage intended to guide an expansion of an airbag,
- a base portion having a base portion internal face and a base portion external face, the base portion comprises a first base portion, a base protrusion and a second base portion, the base portion is integral with the chute channel portion, the base portion internal face of the first base portion is connected to the first end of the chute channel portion, the external surface of the base protrusion protrudes with respect to the external surface of the second base portion and the internal surface of the base protrusion defines a recess, and
- a reinforcing portion integral with the base portion and connected to the base portion internal face, the reinforcing portion defining a plurality of cavities.

The base protrusion comprises a flange and substantially triangular ribs integral with the flange and the second base portion. The ribs are spaced from each other and connected to the base portion external face of the second base portion. So, the foam layer must extend between the ribs and the foam layer must also cover the ribs. As gas release may occur when the foam layer is high, only quite small ribs can avoid problems during foaming. Moreover, marks may appear on the cover at each rib. Furthermore, when an occupant touches the interior trim part the feel is uneven. So, such an embodiment is not fully satisfying.

The purpose of the present disclosure is to enable having less restrained interior trim part shapes with satisfying appearance and touch feeling.

### Summary of the disclosure

According to the present disclosure, the interior trim part has a structural part and the structural part comprises:
- a chute channel portion having a substantially tubular shape extending along a chute demolding direction between a first end and a second end, the chute channel portion comprising a first wall, a second wall and two side walls extending between the first wall and the second wall, the chute channel portion has a chute channel internal face, the chute channel internal face delimits an expansion passage intended to guide an expansion of an airbag, and
- a base portion having a base portion internal face and a base portion external face, the base portion comprises a first base portion, a base protrusion and a second base portion, the base portion is integral with the chute channel portion, the base portion internal face of the first base portion is connected to the first end of the chute channel portion, the base protrusion extends between the first base portion and the second base portion, the external surface of the base protrusion protrudes with respect to the external surface of the second base portion and the base portion internal face of the base protrusion defines a recess,
- a reinforcing portion integral with the chute channel portion and the base portion, the reinforcing portion is connected to the base portion internal face, the reinforcing portion defines a plurality of cavities, the cavities include first wall cavities extending through the first wall, each of the first wall cavities extends in a protrusion demolding direction between a first wall cavity bottom and a first wall cavity free end, the first wall cavity bottom being at the base portion internal surface, the first wall cavity free end being at the chute channel internal face, the protrusion demolding direction defining a deviation angle with respect to the chute demolding direction, the deviation angle being non null.

As the interior trim part has first wall cavities extending through the first wall of the chute channel along the protrusion demolding direction which is not parallel with the chute demolding direction, the base protrusion may protrude with respect to the second base portion from more than few millimeters while avoiding huge thickness of material everywhere in the structural part. Therefore, the molding time is not substantially increased and the appearance of the interior trim part is satisfying.

According to another feature in accordance with the present disclosure, preferably the chute channel internal face includes a first wall edge surface extending from the first end over a first wall edge distance being not lower than 5 millimeters along the chute demolding direction, and the first wall edge surface is deprived of cavities.

Thus, the risk of tear of the airbag by contact against the chute channel internal face, near the first end, during deployment is reduced.

More preferably, the first wall edge surface extends from the first end, at least 10 millimeters in the chute demolding direction.

According to another feature in accordance with the present disclosure, preferably the first wall cavity bottom is distant from the base portion external face by a cavity bottom thickness which is between 2 and 3.5 millimeters.

Therefore, increase of the cycle time for manufacturing the interior trim part is avoided.

In advantageous embodiments, the interior trim part preferably further has one or more of the following features:
- the first wall cavity bottoms are at least in part in the recess;
- the first wall cavities define between them first wall ribs, perpendicularly to the protrusion demolding direction the first wall ribs having a first wall rib thickness between 3 and 15 millimeters, preferably between 4 and 6 millimeters;
- the deviation angle is between 20 degrees and 70 degrees, preferably between 30 degrees and 60 degrees;
- the interior trim part further comprises a cover and a foam layer, the foam layer extending between the base portion external face and the cover;
- the whole foam layer is supported by the base portion;
- the first base portion comprises a flap which closes the first end of the expansion passage, the flap being intended to open during an expansion of the airbag;
- the base protrusion protrudes from the second base portion over a protrusion distance along a direction perpendicular to the chute demolding direction which is preferably between 25 millimeters and 50 millimeters ;
- perpendicularly to the protrusion demolding direction, the ratio between the area of the first wall ribs and the total area of the first wall cavities and the first wall ribs is preferably between 25 percent and 50 percent;
- perpendicularly to the protrusion demolding direction, the first wall cavities have a width which is between 8 millimeters and 25 millimeters;
- the base portion has a substantially constant thickness between the base portion internal face and the base portion external face;
- the first end of the chute channel portion is an upper end, the second end of the chute channel portion is a lower end, the first wall is a front wall, the second wall is a back wall, the first base portion is a base top, the second base portion is a base front and the base front is intended to face a vehicle occupant.

The present disclosure also relates to an assembly comprising the above mentioned interior trim part further and an airbag module adapted for being expanded through the expansion passage.

The present disclosure also relates to process for producing the interior trim part comprising:
introducing thermoplastic material into a molding cavity of mold for molding the structural part, the mold comprising a first mold part, a second mold part and a movable mold part,
moving the movable part with respect to the first mold part from a forward position to a backward position along the chute demolding direction,
then, moving the second mold part with respect to the first mold part from a closing position to an opening position along the protrusion demolding direction.

The process preferably also comprises providing the cover and producing the foam layer by foaming between the base portion and the cover.

### Brief description of the drawings

Other features and advantages of the present disclosure will appear in the following detailed description, with reference to the appended drawings in which:
- FIG. 1 illustrates an interior trim part in cross section along a plane referenced I-I in FIG.2, in accordance with a first embodiment,
- FIG. 2 illustrates the interior trim in cross section along a plane referenced II-II in FIG. 1,
- FIG. 3 illustrates the interior trim part in cross section along a plane referenced III-III in FIG. 1,
- FIG. 4 illustrates a first step of a process for manufacturing the interior trim part,
- FIG. 5 illustrates a second step of a process for manufacturing the interior trim part,
- FIG. 6 illustrates a third step of a process for manufacturing the interior trim part,
- FIG. 7 illustrates a second embodiment in accordance with FIG. 2.

### Detailed description of the disclosure

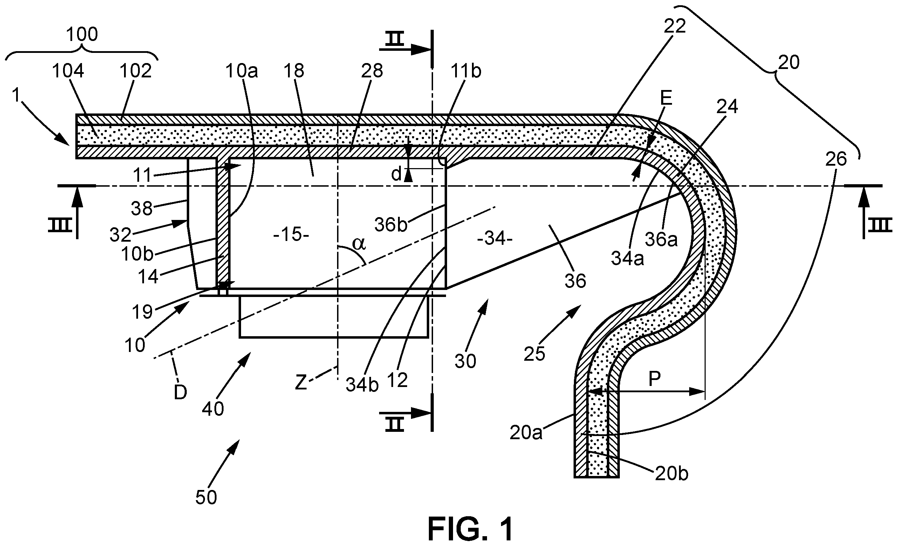

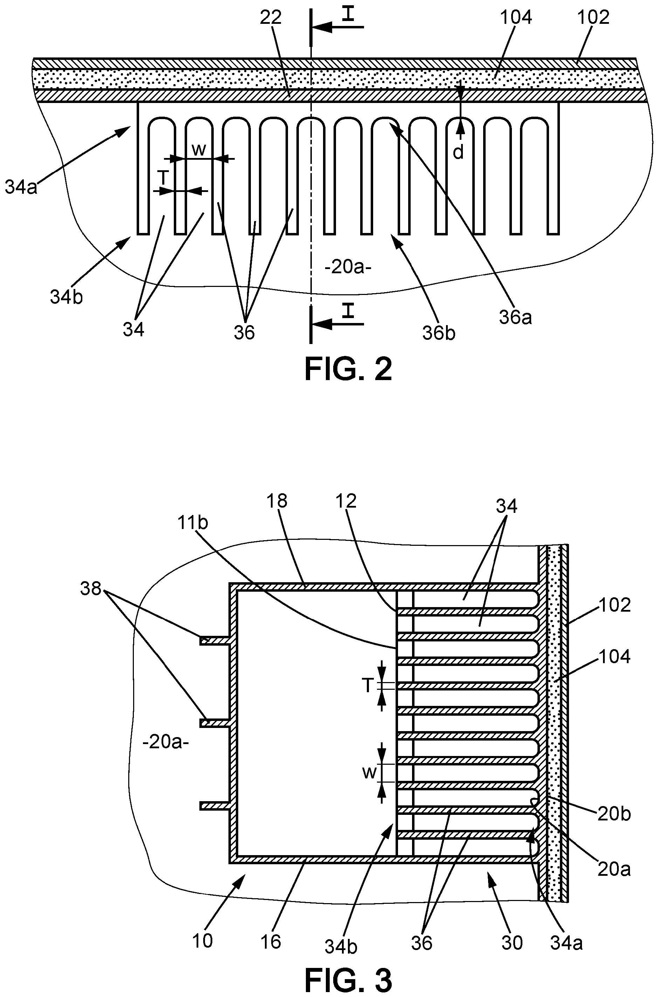

Figures 1 and 2 illustrate an assembly 50 comprising an interior trim part 100 and an airbag module 40. The interior trim part comprises a structural part 1, a cover 102 and a foam layer 104.

As shown in figure 1, the structural part 1 is a single part including a chute channel portion 10, a base portion 20 and a reinforcing portion 30.

The chute channel portion 10 has a substantially tubular shape extending along a chute demolding direction Z between a first end 11 and a second end 19. The chute channel portion 10 has a substantially rectangular cross-section. The chute channel comprises a first wall 12, a second wall 14, a left-side wall 16 and a right-side wall 18. The left-side wall 16 and the right-side wall 18 extends between the first wall 12 and the second wall 14. The chute channel portion 10 has a chute channel internal face 10a and a chute channel external face 10b. The chute channel 10 has an expansion passage 15. The expansion passage 15 extends between the first end 11 and the second end 19 along the chute demolding direction Z and the expansion passage 15 is delimited by the first wall 12, the second wall 14, the left-side wall 16 and the right-side wall 18 perpendicularly to the chute demolding direction Z.

In the embodiments shown in the figures, the interior trim part 100 is a dashboard, the first wall 12 is a front wall, the second wall 14 is a back wall, the first end 11 is an upper end and the second end 19 is a lower end. Even if, the interior trim part is preferably a dashboard or at least a dashboard portion, the interior trim part can also be for example a door panel or a roof panel.

The base portion 20 is integral with the chute channel portion 10. The base portion 20 has a base portion internal face 20a and a base portion external face 20b. The base portion 20 has a base portion thickness between the base portion internal face 20a and the base portion external face 20b. The base portion thickness is substantially constant and preferably between 2 millimeters and 3.5 millimeters. Preferably, the base portion 20 has no hollow in order to avoid foam leakage during foaming, no recess and the base portion external face 20b is substantially smooth.

The base portion 20 comprises a first base portion 22, a base protrusion 24 and a second base portion 26.

The first base portion 22 is a base top, is at the top of the base portion 20 and is substantially horizontal. The first base portion is substantially flat, but in a variant the first base portion could be slightly curved. The base portion internal face 20a of the first base portion 22 is connected to the first end 11 of the chute channel portion 10. The first base portion 22 comprises a flap 28 which closes the first end 11 of the expansion passage 15. The flap 28 is preferably at least partially surrounded by a weakness line in order to open during the airbag expansion. The flap is substantially rectangular. In the illustrated embodiment, the weakness line has a U-shape extending along 3 of the four sides of the flap 28, the flap 28 being intended to rotate along the fourth side to open, as well known. In a variant, two flaps with a H-shape weakness line (or more than two flaps, for instance four flaps with cross shape weakness line) can be substituted for the U shape single flap 28 of the illustrated embodiment.

The second base portion 26 is a base front, is substantially vertical and is intended to face a vehicle occupant. The second base portion 26 is substantially angled between 80 and 100 degrees with respect to the first base portion. The second base portion 26 is substantially parallel to the second wall 14. The base protrusion 24 extends between the first base portion 22 and the second base portion 26. The base protrusion 24 is substantially curved. In the illustrated embodiment, the curvature is substantially constant. In a variant, the base protrusion can have in cross section a broken line shape, the protrusion comprising several successive substantially flat planes connected to each other. Regarding the base portion external face 20b, the base protrusion 24 protrudes from the second base portion 26. Regarding the base portion internal face 20a, the base protrusion 24 defines a recess 25.

The second base portion 26 is substantially parallel to the first wall 12 and the second wall 14. The first wall 12 is closest to the base protrusion 24 than the second wall 14.

The reinforcing portion 30 is integral with the chute channel portion 10. The reinforcing portion 30 is also integral with the base portion 20. The reinforcing portion 30 is connected to the base portion internal face 20a.

The reinforcing portion 30 defines a plurality of cavities 32. In the embodiment shown in figures 1 and 2, the cavities 32 extends in a protrusion demolding direction D. The reinforcing portion 30 comprises ribs 38 connected to the chute channel portion 10 and to the base portion 20.

The cavities 32 include first wall cavities 34. The first wall cavities 34 extend through the first wall 12. Each of the first wall cavities 34 extends in the protrusion demolding direction D between a first wall cavity bottom 34a and a wall cavity free end 34b. The first wall cavity free end 34b of the first wall cavities 34 are at the chute channel internal face 10a. In the embodiments shown, the first wall cavity bottom 34a extend in part in the recess 25 at the chute channel internal surface 20a.

The ribs 38 comprise first wall ribs 36. The first wall ribs 36 extend between first wall cavities 34. The first wall ribs 36 extend along the protrusion demolding direction D between a base portion end 36a and a first wall end 36b. The base portion end 36a of the first wall ribs 36 is connected to the base portion internal face 20a. The first wall end 36b of the first wall ribs 36 is at the chute channel internal face 10a. At the first wall end 36b, the first wall ribs 36 defines at least part of the first wall 12.

The ribs 38 also comprise ribs extending between the second wall 14 and base portion internal face 20a which are optional and, in the present embodiment, extend along the protrusion demolding direction D. In a variant, the structural part could also comprise ribs 38 extending between the base and portion 20 and the left side wall 16 as well as ribs 38 extending between the base and portion 20 and the right side wall 18, so that the ribs 38 would surround the chute channel portion 10.

The first wall cavity bottom 34a is distant from the base portion external face 20a by a cavity bottom thickness E. The cavity bottom thickness E is substantially equal to the base portion thickness. The cavity bottom thickness E is between 2 and 3.5 millimeters.

The first wall cavity free end 34b is distant from the base portion internal face 20a. A first wall edge surface 11b extends between the base portion internal face 20a and the first wall cavity free end 34b. Therefore, the first wall edge surface 11b is deprived of cavities and smooth. Along the chute demolding direction Z, the first wall edge surface 11b extend over a first wall edge distance d which is between 5 millimeters and 20 millimeters, preferably between 10 millimeters and 15 millimeters.

Perpendicularly to the protrusion demolding direction D, the first wall ribs 36 have a first wall rib thickness T. The first wall rib thickness T is preferably between 3 and 15 millimeters, more preferably between 4 and 6 millimeters.

Perpendicularly to the protrusion demolding direction D, the distance between two successive first wall ribs 36, i.e. the width w of the first wall cavities 34 is preferably between 8 millimeters and 25 millimeters.

Regarding the base portion external face 20b, the base protrusion 24 protrudes from the second base portion 26 over a protrusion distance P along a direction perpendicular to the chute demolding direction Z which is preferably between 25 millimeters and 50 millimeters.

The protrusion demolding direction D defines a deviation angle α with respect to the chute demolding direction Z. The deviation angle α is non null, preferably between 20 and 70 degrees.

The airbag module 40 comprises an airbag and an inflator intended to inflate the airbag, so that the airbag expands. The airbag module 40 is arranged near or in the expansion passage 15, so that the airbag may expand through the expansion passage 15, open the flap 28 and expand in the passenger compartment. The airbag module 40 is supported by the chute channel portion 10 and/or by a cross bar.

The foam layer 104 is between the base portion 20 and the cover 102. The foam layer 104 has a substantially constant thickness. The whole foam layer 104 is supported by the base portion 20. The foam layer 104 is preferably achieved by foaming between the base portion 20 and the cover 102.

In the embodiment shown in figure 1, the first wall ribs 36 are plane, parallel and separate. The first wall ribs 36 have a substantially constant thickness.

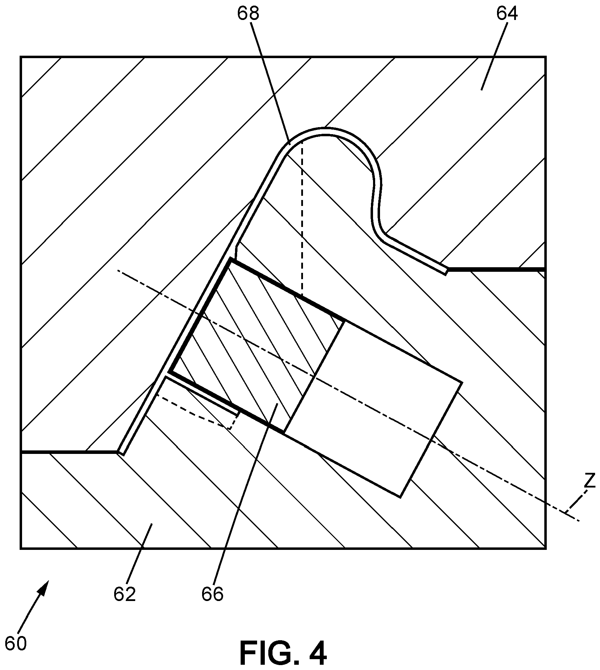

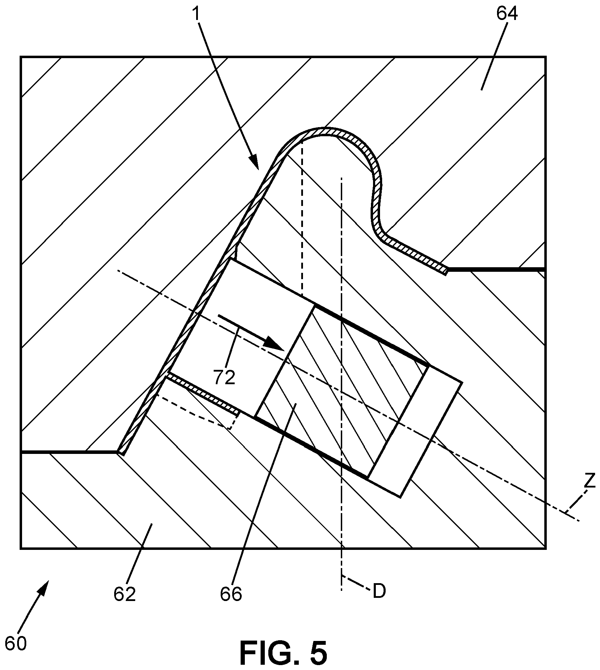

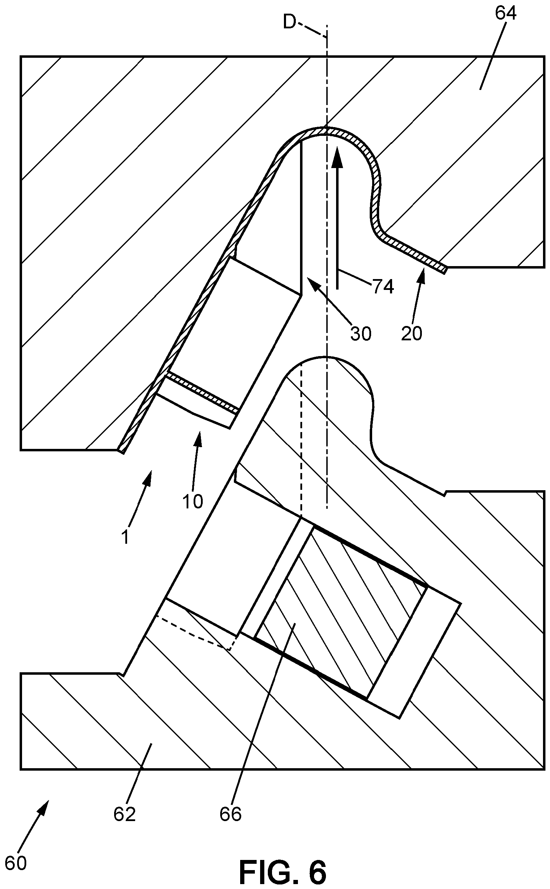

Figures 4 to 6 show a mold 60 for molding the structural part 1. The mold comprises a first mold part 62, a second mold part 64 and a movable mold part 66. The second mold part 64 is movable with respect to the first mold part 62 along the protruding demolding direction D between a closing position shown in figures 4 and 5 and an opening position shown in figure 6. The movable mold part 66 is movable with respect to the first mold part 62 along the chute demolding direction Z between a forward position shown in figure 4 and a backward position shown in figures 5 and 6.

In Figure 4, the second mold part 64 is in the closing position and the movable mold part 66 is in the forward position. The first mold part 62, the second mold part 64 and the movable mold part 66 define a molding cavity 68. Thermoplastic material is injected in the molding cavity 68, so that the structural part 1 is molded, as shown in figure 5. Then, the movable part 66 is moved from the forward position to the backward position along the chute demolding direction Z, as represented by arrow 72. Afterwards, as shown in figure 6, the second mold part 64 is moved from the closing position to the opening position along the protrusion demolding direction D, as represented by arrow 74.

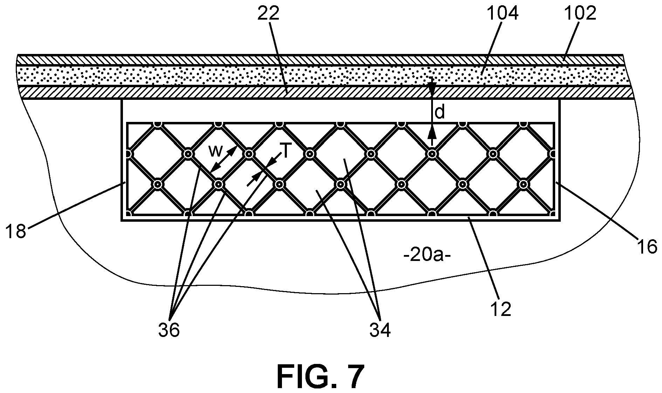

Figure 7 shows a second embodiment which differs from the first embodiment shown in figures 1 and 2 in that ribs 38 perpendicularly crossing one another and defining cavities 32 are substituted for separate and parallel ribs. In particular, the ribs 38 comprise first wall ribs 36 defining first wall cavities 34.

In the embodiment shown in figure 7, the first wall ribs 36 define a pattern with (substantially) squares having sides between 8 millimeters and 20 millimeters. In the embodiment shown in figure 7, the first wall ribs 36 have a first wall rib thickness T which can be lower than in the embodiment shown in figures 1 and 2, preferably between 3 millimeters and 5 millimeters, due to the pattern (with crossing ribs).

Other patterns for the ribs 38 can be contemplated, in particular ribs having not constant thickness and defining rounded cavities 32.

Perpendicularly to the protrusion demolding direction D (see figures 2 and 7), the ratio between the area of the first wall ribs 36 and the total area of the first wall cavities 34 and the first wall ribs 36 is preferably between 25 percent and 50 percent. In other words, the ratio between the area of the first wall ribs 36 and the area of the first wall cavities 34 is preferably between 0.5 and 1.

## Claims

1. An interior trim part (100) for a vehicle, the interior trim part having a structural part (1), the structural part (1) comprising:
- a chute channel portion (10) having a substantially tubular shape extending along a chute demolding direction (Z) between a first end (11) and a second end (19), the chute channel portion (10) comprising a first wall (12), a second wall (14) and two side walls (16, 18) extending between the first wall (12) and the second wall (14), the chute channel portion (10) has a chute channel internal face (10a), the chute channel internal face (10a) delimits an expansion passage (15) intended to guide an expansion of an airbag,
- a base portion (20) having a base portion internal face (20a) and a base portion external face (20b), the base portion (20) comprises a first base portion (22), a base protrusion (24) and a second base portion (26), the base portion internal face (20a) of the first base portion (22) is connected to the first end (11) of the chute channel portion (10), the base protrusion (24) extends between the first base portion (22) and the second base portion (26), the external surface (20b) of the base protrusion (24) protrudes with respect to the external surface (20b) of the second base portion (26) and the base portion internal face (20a) of the base protrusion (24) defines a recess (25), and
- a reinforcing portion (30) integral with the chute channel portion (10) and the base portion (20), the reinforcing portion (30) is connected to the base portion internal face (20a), the reinforcing portion (30) defines a plurality of cavities (32),
the interior trim part is **characterized in that** :
- the base portion (20) is integral with the chute channel portion (10), and
- the cavities (32) include first wall cavities (34) extending through the first wall (12), each of the first wall cavities (34) extends in a protrusion demolding direction (D) between a first wall cavity bottom (34a) and a first wall cavity free end (34b), the first wall cavity bottom (34a) being at the base portion internal surface (20a), the first wall cavity free end (34b) being at the chute channel internal face (10a), the protrusion demolding direction (D) defining a deviation angle (α) with respect to the chute demolding direction (Z), the deviation angle (α) being non null.

2. The interior trim part according to claim 1 wherein:
- the chute channel internal face (10a) includes a first wall edge surface (11b) extending from the first end (11) over a first wall edge distance (d) being not lower than 5 millimeters along the chute demolding direction (Z), and
- the first wall edge surface (11b) is deprived of cavities (32).

3. The interior trim part according to any one of the preceding claims wherein the first wall cavity bottom (34a) is distant from the base portion external face (20a) by a cavity bottom thickness (E) which is between 2 and 3.5 millimeters.

4. The interior trim part according to any one of the preceding claims wherein the first wall cavity bottoms (34a) are at least in part in the recess (25).

5. The interior trim part according to any one of the preceding claims wherein the first wall cavities (34) define between them first wall ribs (36), perpendicularly to the protrusion demolding direction (D) the first wall ribs (36) having a first wall rib thickness (T) between 3 and 15 millimeters, preferably between 4 and 6 millimeters.

6. The interior trim part according to any one of the preceding claims wherein the deviation angle (α) is between 20 degrees and 70 degrees.

7. The interior trim part according to any one of the preceding claims wherein the interior trim part (100) further comprises a cover (102) and a foam layer (104), the foam layer (104) extending between the base portion external face (20a) and the cover (102).

8. The interior trim part according to the preceding claim wherein the whole foam layer (104) is supported by the base portion (20).

9. The interior trim part according to any one of the preceding claims wherein the first base portion (22) comprises a flap (28) which closes the first end (11) of the expansion passage (15), the flap (28) being intended to open during an expansion of the airbag.

10. The interior trim part according to any one of the preceding claims wherein the base protrusion (24) protrudes from the second base portion (26) over a protrusion distance (P) along a direction perpendicular to the chute demolding direction (Z) which is preferably between 25 millimeters and 50 millimeters first wall first wall first wall

11. The interior trim part according to any one of the preceding claims wherein, perpendicularly to the protrusion demolding direction (D), the ratio between the area of the first wall ribs (36) and the total area of the first wall cavities (34) and the first wall ribs (36) is preferably between 25 percent and 50 percent.

12. The interior trim part according to any one of the preceding claims wherein, perpendicularly to the protrusion demolding direction (D), the first wall cavities (34) have a width (w) which is between 8 millimeters and 25 millimeters.

13. Assembly comprising the interior trim part according to any one of the preceding claims and an airbag module (40) adapted for being expanded through the expansion passage (15).

14. Process for producing the interior trim part according to any one of the claims 1 to 12 comprising:
introducing thermoplastic material into a molding cavity (68) of mold (60) for molding the structural part (1), the mold (60) comprising a first mold part (62), a second mold part (64) and a movable mold part (66),
moving the movable part (66) with respect to the first mold part (62) from a forward position to a backward position along the chute demolding direction (Z),
then, moving the second mold part (64) with respect to the first mold part (62) from a closing position to an opening position along the protrusion demolding direction (D).

15. Process according to claim 14 for producing the interior part according to claim 7, further comprising:
- providing the cover (102), and
- producing the foam layer (104) by foaming between the base portion (20) and the cover (102).

## Patentansprüche

1. Innenverkleidungsteil (100) für ein Fahrzeug, wobei das Innenverkleidungsteil ein Strukturteil (1) aufweist, wobei das Strukturteil (1) umfasst:
- einen Schachtkanalabschnitt (10), der eine im Wesentlichen rohrförmige Form aufweist und sich entlang einer Schachtentformungsrichtung (Z) zwischen einem ersten Ende (11) und einem zweiten Ende (19) erstreckt, wobei der Schachtkanalabschnitt (10) eine erste Wand (12), eine zweite Wand (14) und zwei Seitenwände (16, 18) aufweist, die sich zwischen der ersten Wand (12) und der zweiten Wand (14) erstrecken, wobei der Schachtkanalabschnitt (10) eine Schachtkanalinnenfläche (10a) aufweist, wobei die Schachtkanalinnenfläche (10a) einen Ausdehnungsdurchgang (15) begrenzt, der dazu bestimmt ist, eine Ausdehnung eines Airbags zu führen,
- einen Basisabschnitt (20) mit einer Basisabschnittinnenfläche (20a) und einer Basisabschnittaußenfläche (20b), wobei der Basisabschnitt (20) einen ersten Basisabschnitt (22), einen Basisvorsprung (24) und einen zweiten Basisabschnitt (26) umfasst, wobei die Basisabschnittinnenfläche (20a) des ersten Basisabschnitts (22) mit dem ersten Ende (11) des Schachtkanalabschnitts (10) verbunden ist, der Basisvorsprung (24) sich zwischen dem ersten Basisabschnitt (22) und dem zweiten Basisabschnitt (26) erstreckt, die Außenoberfläche (20b) des Basisvorsprungs (24) in Bezug auf die Außenoberfläche (20b) des zweiten Basisabschnitts (26) hervorsteht und die Basisabschnittinnenfläche (20a) des Basisvorsprungs (24) eine Ausnehmung (25) definiert, und
- einen Verstärkungsabschnitt (30), der einstückig mit dem Schachtkanalabschnitt (10) und dem Basisabschnitt (20) ausgebildet ist, wobei der Verstärkungsabschnitt (30) mit der Basisabschnittinnenfläche (20a) verbunden ist, wobei der Verstärkungsabschnitt (30) eine Vielzahl von Hohlräumen (32) definiert, wobei der Innenverkleidungsteil **dadurch gekennzeichnet ist, dass:**
- der Basisabschnitt (20) mit dem Schachtkanalabschnitt (10) einstückig ausgebildet ist, und
- die Hohlräume (32) erste Wandhohlräume (34) einschließen, die sich durch die erste Wand (12) erstrecken, wobei sich jeder der ersten Wandhohlräume (34) in einer Vorsprungsentformungsrichtung (D) zwischen einem ersten Wandhohlraumboden (34a) und einem freien Ende des ersten Wandhohlraums (34b) erstreckt, wobei der erste Wandhohlraumboden (34a) an der Basisabschnittinnenfläche (20a) liegt und das freie Ende des ersten Wandhohlraums (34b) an der Schachtkanalinnenfläche (10a) liegt, wobei die Vorsprungsentformungsrichtung (D) einen Abweichungswinkel (α) in Bezug auf die Schachtentformungsrichtung (Z) definiert, wobei der Abweichungswinkel (α) ungleich null ist.

2. Innenverkleidungsteil nach Anspruch 1 wobei:
- die Schachtkanalinnenfläche (10a) eine erste Wandkantenoberfläche (11b) einschließt, die sich vom ersten Ende (11) über eine erste Wandkantenentfernung (d) erstreckt, die nicht weniger als 5 Millimeter entlang der Schachtentformungsrichtung (Z) beträgt, und
- die erste Wandkantenoberfläche (11b) frei von Hohlräumen (32) ist.

3. Innenverkleidungsteil nach einem der vorstehenden Ansprüche, wobei der erste Wandhohlraumboden (34a) von der Basisabschnittaußenfläche (20a) um eine Hohlraumbodendicke (E) beabstandet ist, die zwischen 2 und 3,5 Millimetern liegt.

4. Innenverkleidungsteil nach einem der vorstehenden Ansprüche, wobei die ersten Wandhohlraumböden (34a) mindestens teilweise in der Ausnehmung (25) liegen.

5. Innenverkleidungsteil nach einem der vorstehenden Ansprüche, wobei die ersten Wandhohlräume (34) zwischen sich erste Wandrippen (36) definieren, wobei die ersten Wandrippen (36) senkrecht zur Vorsprungsentformungsrichtung (D) eine erste Wandrippendicke (T) zwischen 3 und 15 Millimetern, vorzugsweise zwischen 4 und 6 Millimetern aufweisen.

6. Innenverkleidungsteil nach einem der vorstehenden Ansprüche, wobei der Abweichungswinkel (a) zwischen 20 Grad und 70 Grad liegt.

7. Innenverkleidungsteil nach einem der vorstehenden Ansprüche, wobei das Innenverkleidungsteil (100) ferner eine Abdeckung (102) und eine Schaumschicht (104) umfasst, wobei sich die Schaumschicht (104) zwischen der Basisabschnittaußenfläche (20a) und der Abdeckung (102) erstreckt.

8. Innenverkleidungsteil nach dem vorstehenden Anspruch, wobei die gesamte Schaumschicht (104) von dem Basisabschnitt (20) getragen wird.

9. Innenverkleidungsteil nach einem der vorstehenden Ansprüche, wobei der erste Basisabschnitt (22) eine Klappe (28) umfasst, die das erste Ende (11) des Ausdehnungsdurchgangs (15) verschließt, wobei die Klappe (28) dazu bestimmt ist, sich während einer Ausdehnung des Airbags zu öffnen.

10. Innenverkleidungsteil nach einem der vorstehenden Ansprüche, wobei der Basisvorsprung (24) aus dem zweiten Basisabschnitt (26) über eine Vorsprungsentfernung (P) entlang einer Richtung senkrecht zur Schachtentformungsrichtung (Z) herausragt, die vorzugsweise zwischen 25 Millimetern und 50 Millimetern liegt erste Wand erste Wand erste Wand

11. Innenverkleidungsteil nach einem der vorstehenden Ansprüche, wobei senkrecht zur Vorsprungsentformungsrichtung (D) das Verhältnis zwischen dem Bereich der ersten Wandrippen (36) und dem Gesamtbereich der ersten Wandhohlräume (34) und der ersten Wandrippen (36) vorzugsweise zwischen 25 Prozent und 50 Prozent liegt.

12. Innenverkleidungsteil nach einem der vorstehenden Ansprüche, wobei die ersten Wandhohlräume (34) senkrecht zur Vorsprungsentformungsrichtung (D) eine Breite (w) aufweisen, die zwischen 8 Millimetern und 25 Millimetern liegt.

13. Anordnung, umfassend das Innenverkleidungsteil nach einem der vorstehenden Ansprüche und ein Airbagmodul (40), das dazu ausgelegt ist, durch den Ausdehnungsdurchgang (15) ausgedehnt zu werden.

14. Verfahren zum Herstellen des Innenverkleidungsteils nach einem der Ansprüche 1 bis 12, umfassend:
Einbringen von thermoplastischem Material in einen Formhohlraum (68) einer Form (60) zum Formen des Strukturteils (1), wobei die Form (60) einen ersten Formteil (62), einen zweiten Formteil (64) und einen beweglichen Formteil (66) umfasst,
Bewegen des beweglichen Teils (66) in Bezug auf den ersten Formteil (62) von einer Vorwärtsposition zu einer Rückwärtsposition entlang der Schachtentformungsrichtung (Z),
dann, Bewegen des zweiten Formteils (64) in Bezug auf das erste Formteil (62) aus einer Schließposition in eine Öffnungsposition entlang der Vorsprungsentformungsrichtung (D).

15. Verfahren nach Anspruch 14 zum Herstellen des Innenteils nach Anspruch 7, ferner umfassend:
- Bereitstellen der Abdeckung (102), und
- Erzeugen der Schaumschicht (104) durch Aufschäumen zwischen dem Basisabschnitt (20) und der Abdeckung (102).

## Revendications

1. Pièce de garniture intérieure (100) pour un véhicule, la pièce de garniture intérieure présentant une pièce structurelle (1), la pièce structurelle (1) comprenant :
- une partie de canal de goulotte (10) présentant une forme sensiblement tubulaire s'étendant le long d'une direction de démoulage de goulotte (Z) entre une première extrémité (11) et une seconde extrémité (19), la partie de canal de goulotte (10) comprenant une première paroi (12), une seconde paroi (14) et deux parois latérales (16, 18) s'étendant entre la première paroi (12) et la seconde paroi (14), la partie de canal de goulotte (10) présente une face interne de canal de goulotte (10a), la face interne de canal de goulotte (10a) délimite un passage d'expansion (15) destiné à guider une dilatation d'un coussin de sécurité gonflable,
- une partie de base (20) présentant une face interne de la partie de base (20a) et une face externe de la partie de base (20b), la partie de base (20) comprend une première partie de base (22), une saillie de base (24) et une seconde partie de base (26), la face interne de la partie de base (20a) de la première partie de base (22) est reliée à la première extrémité (11) de la partie de canal de goulotte (10), la saillie de base (24) s'étend entre la première partie de base (22) et la seconde partie de base (26), la surface externe (20b) de la saillie de base (24) fait saillie par rapport à la surface externe (20b) de la seconde partie de base (26) et la face interne de la partie de base (20a) de la saillie de base (24) définit un renfoncement (25), et
- une partie de renforcement (30) solidaire de la partie de canal de goulotte (10) et de la partie de base (20), la partie de renforcement (30) est reliée à la face interne (20a) de partie de base, la partie de renforcement (30) définit une pluralité de cavités (32), la pièce de garniture intérieure est
**caractérisée en ce que** :
- la partie de base (20) est solidaire de la partie de canal de goulotte (10), et
- les cavités (32) comportent des cavités de première paroi (34) s'étendant à travers la première paroi (12), chacune des cavités de première paroi (34) s'étend dans une direction de démoulage de saillie (D) entre un fond de cavité de première paroi (34a) et une extrémité libre de cavité de première paroi (34b), le fond de cavité de première paroi (34a) se trouvant au niveau de la surface interne de la partie de base (20a), l'extrémité libre de cavité de première paroi (34b) se trouvant au niveau de la face interne de canal de goulotte (10a), la direction de démoulage de saillie (D) définissant un angle d'écart (α) par rapport à la direction de démoulage de goulotte (Z), l'angle d'écart (α) étant non nul.

2. Pièce de garniture intérieure selon la revendication 1, dans laquelle :
- la face interne de canal de goulotte (10a) comporte une première surface de bord de paroi (11b) s'étendant à partir de la première extrémité (11) sur une première distance de bord de paroi (d) n'étant pas inférieure à 5 millimètres le long de la direction de démoulage de goulotte (Z), et
- la première surface du bord de paroi (11b) est dépourvue de cavités (32).

3. Pièce de garniture intérieure selon l'une quelconque des revendications précédentes, dans laquelle le fond de cavité de première paroi (34a) est éloigné de la face externe de la partie de base (20a) d'une épaisseur de fond de cavité (E) comprise entre 2 et 3,5 millimètres.

4. Pièce de garniture intérieure selon l'une quelconque des revendications précédentes, dans laquelle les fonds de cavité de première paroi (34a) se trouvent au moins en partie dans le renfoncement (25).

5. Pièce de garniture intérieure selon l'une quelconque des revendications précédentes, dans laquelle les cavités de première paroi (34) définissent entre elles des nervures de première paroi (36), perpendiculairement à la direction de démoulage de saillie (D), les nervures de première paroi (36) présentant une épaisseur de nervure de première paroi (T) comprise entre 3 et 15 millimètres, de préférence entre 4 et 6 millimètres.

6. Pièce de garniture intérieure selon l'une quelconque des revendications précédentes, dans lequel l'angle d'écart (α) est compris entre 20 et 70 degrés.

7. Pièce de garniture intérieure selon l'une quelconque des revendications précédentes, dans laquelle la pièce de garniture intérieure (100) comprend en outre un couvercle (102) et une couche de mousse (104), la couche de mousse (104) s'étendant entre la face externe de la partie de base (20a) et le couvercle (102).

8. Pièce de garniture intérieure selon la revendication précédente, dans laquelle l'ensemble couche de mousse (104) est supporté par la partie de base (20).

9. Pièce de garniture intérieure selon l'une quelconque des revendications précédentes dans laquelle la première partie de base (22) comprend un volet (28) qui ferme la première extrémité (11) du passage de dilatation (15), le volet (28) étant destiné à s'ouvrir lors d'une dilatation du coussin de sécurité gonflable.

10. Pièce de garniture intérieure selon l'une quelconque des revendications précédentes, dans laquelle la saillie de base (24) fait saillie de la seconde partie de base (26) sur une distance de saillie (P) le long d'une direction perpendiculaire à la direction de démoulage de goulotte (Z) qui est de préférence comprise entre 25 millimètres et 50 millimètres première paroi première paroi première paroi

11. Pièce de garniture intérieure selon l'une quelconque des revendications précédentes dans laquelle, perpendiculairement à la direction de démoulage de saillie (D), le rapport entre la zone des nervures de première paroi (36) et la zone totale des cavités de première paroi (34) et des nervures de première paroi (36) est de préférence compris entre 25 % et 50 %.

12. Pièce de garniture intérieure selon l'une quelconque des revendications précédentes dans laquelle, perpendiculairement à la direction de démoulage de saillie (D), les cavités de première paroi (34) présentent une largeur (w) comprise entre 8 millimètres et 25 millimètres.

13. Ensemble comprenant la pièce de garniture intérieure selon l'une quelconque des revendications précédentes et un module de coussin de sécurité gonflable (40) conçu pour être dilaté à travers le passage de dilatation (15).

14. Procédé de production de la pièce de garniture intérieure selon l'une quelconque des revendications 1 à 12 comprenant :
l'introduction du matériau thermoplastique dans une cavité de moulage (68) du moule (60) pour le moulage de la pièce structurelle (1), le moule (60) comprenant une première pièce de moule (62), une seconde pièce de moule (64) et une pièce de moule mobile (66),
le déplacement de la pièce mobile (66) par rapport à la première pièce de moule (62) d'une position avant vers une position arrière le long de la direction de démoulage de goulotte (Z),
ensuite, le déplacement de la seconde pièce de moule (64) par rapport à la première pièce de moule (62) d'une position de fermeture vers une position d'ouverture le long de la direction de démoulage de saillie (D).

15. Procédé selon la revendication 14 pour produire la pièce intérieure selon la revendication 7, comprenant en outre :
- la fourniture du couvercle (102), et
- la production de la couche de mousse (104) par moussage entre la partie de base (20) et le couvercle (102).
